# DEMANDE DE BREVET EUROPEEN

(11) **EP 0 980 158 A1**
(43) Date de publication de la demande: **16.02.2000**
(21) Numéro de dépôt: 99401994.1
(22) Date de dépôt: 05.08.1999
(51) Int. Cl.: H04J 3/06, H04L 25/14

(54) **Procédé et interface d'interconnexion mettant en oeuvre des liaisons série haut-débit**

(30) Priorité: 13.08.1998 FR 9810402
(71) Demandeur: BULL S.A., 78430 Louveciennes (FR)
(72) Inventeur: Lecourtier, Georges, 78000 Versailles (FR); Kaszynski, Anne, Mainguerin, 78660 Ablis (FR)

(57) **Abrégé**

Procédé d'interconnexion entre des modules informatiques ou de communication de données (A et B), au moyen de liaisons série haut débit point-à-point véhiculant des informations multiplexées organisées en trames comportant un motif de reconnaissance de début de trame. Il consiste, en émission et en réception, à synchroniser analogiquement les horloges de base des modules sur une horloge de référence générée par un des modules désigné comme module de référence, appelé module maître, les autres modules étant appelés modules esclaves, et à synchroniser numériquement le début des trames de chaque module esclave sur le début des trames émises par le module maître.

Les applications vont notamment à l'interconnexion de modules multiprocesseurs par des liaisons point-à-point série-parallèle.

## Description

La présente invention se rapporte au domaine des réseaux à haut débit et plus particulièrement aux réseaux d'interconnexion constitués de liaisons séries haut débit reliant des noeuds de systèmes informatiques ou de systèmes de communication de données, appelés modules dans la suite de la description.

Dans la suite de la description et de façon générale, on appellera lien ou liaison la mise en communication de deux modules distants l'un de l'autre.

L'invention est décrite ci-après en s'appuyant sur le protocole SDH, abréviations anglo-saxonnes pour Synchronous Digital Hierarchy, défini par l'ITU, abréviations anglo-saxonnes pour "International Telecommunication Union", dans ses recommandations G.708, G.709 et G.783.

Cependant, l'invention n'est pas limitée à l'utilisation de ce protocole qui est donné à titre d'exemple pour une bonne compréhension de l'invention.

L'évolution de la demande en matière de services multimédia, notamment le transport d'images numérisées, et les réseaux spécialisés d'interconnexion de réseaux informatiques locaux comportant un nombre croissant de processeurs interconnectés les uns aux autres, appelle à des débits de plus en plus importants sous des contraintes sévères en terme de coût, de temps de transmission, de place et d'intégrité des informations transmises.

Les liaisons séries haut débit de l'art antérieur, et notamment les liaisons série du type SDH qui mettent en oeuvre une liaison constituée de deux liaisons unidirectionnelles point-à-point opposées, ne suffisent plus à satisfaire la demande pour des débits pouvant dépasser plusieurs dizaines de GB/s et dépassant ou égalant typiquement les 50 GB/s. De tels débits sont notamment atteints quand un grand nombre de processeurs communiquent entre eux à l'intérieur d'une machine informatique ou d'un réseau reliant plusieurs machines entre elles.

La limitation due au débit maximal admissible intervient dans la latence d'une machine informatique qui est un paramètre important à considérer dans l'efficacité d'une machine multimodulaire, et ceci d'autant plus que la distance reliant les modules est grande et/ou que le nombre de processeurs communiquant entre eux est grand.

Pour résoudre ce problème, une solution consiste à mettre plusieurs liaisons point-à-point en parallèle.

Une telle solution est connue notamment du document intitulé "High-Performance Parallel Interface-Mechanical, Electrical, and Signalling Protocol Specification (HPPI-PH)", et publié dans "X3T11 Maintenance copy of American National Standard X3.183-1991". Ce document décrit une interface parallèle point-à-point pour transmettre des données numériques à des débits de 800 ou 1600 Mb/s entre des équipements informatiques, et qui sont véhiculées sur des paires de fils de cuivre torsadées, sur des distance de plus de 25 m.

Cependant, cette solution se heurte au problème majeur de la dispersion des temps de propagation dans les liaisons parallèles, appelée également "skew" en terminologie anglo-saxonne, et qui nécessite de résoudre les problèmes de resynchronisation à la réception des données véhiculées sur chaque liaison.

Ce problème est d'autant plus difficile à résoudre que la fréquence de fonctionnement des modules est élevée.

En effet, aux fréquences supérieures à 200 MHz, pour lesquelles les skews deviennent supérieurs à la période bit, les dispersions statiques sont sensibles et dans des configurations complexes la somme des contributions des skews pour une liaison de 10 mètres peut atteindre 10 ns. Pour une liaison de 10 mètres, on a typiquement 4 ns maximum dans les câbles et deux fois 3 ns dans les émetteurs-récepteurs.

Si on répartit les informations contenues dans des messages à transmettre sur un nombre déterminé de liaisons, à raison d'un bit par liaison, les dispersions font qu'en bout des liaisons, les informations arrivent à des instants différents. La difficulté réside alors en ce que pour une fréquence de 200 MHz, soit 5 ns après le départ de l'information, les bits arrivent dans le désordre et on ne sait plus à quel message appartient le bit reçu en bout de liaison.

L'invention a notamment pour but de pallier ces inconvénients.

Un objectif de la présente invention est de proposer une structure d'interface physique capable de supporter des débits de plusieurs GB/s, typiquement supérieur ou égal à 5 GB/s sur 16 voies, soit 2,5 Gb/s par voie, sur des câbles présentant un skew de l'ordre de ± 4 ns.

Dans la suite de la description, on emploiera le terme "voie" pour définir le niveau de parallélisation d'une liaison et le terme "câble" pour définir le support matériel des liaisons.

De même, l'unité GB/s signifie Giga Bytes par seconde et l'unité Gb/s signifie Giga bits par seconde ; un Byte correspondant à un octet, soit 8 bits.

Le skew de ± 4 ns, correspondant à une longueur de quelques mètres, est à comparer avec une période bit, typiquement de l'ordre de 0,4 ns et un en-tête de trame de l'ordre de 50 ns.

La période bit est donc inférieure d'un ordre de grandeur au skew, alors que la durée de l'en-tête est d'un ordre de grandeur supérieur au skew. On sait augmenter la période bit en augmentant le nombre de voies mises en parallèle, mais le nombre de points physiques de connexion doit rester compatible avec les dimensions d'une carte fabriquée industriellement.

A cet effet, l'invention a pour premier objet un procédé d'interconnexion entre des modules informatiques ou de communication de données au moyen de liaisons série haut débit point-à-point véhiculant des informations multiplexées, organisées en trames, et comportant un motif de reconnaissance de début de trame, du type consistant à mettre en parallèle plusieurs voies haut débit permettant d'augmenter le débit d'informations échangées entres les modules.

Le procédé selon l'invention est caractérisé en ce qu'il consiste, en émission et en réception, à synchroniser analogiquement les horloges de base de chaque module sur une horloge de référence générée par un module désigné comme module de référence parmi les modules, appelé module maître, les autres modules étant appelés modules esclaves, et à synchroniser numériquement le début des trames de chaque module esclave sur le début des trames émises par le module maître.

Selon une caractéristique, le procédé consiste pour la synchronisation analogique en émission :
- à extraire les signaux d'horloge de base de chaque module esclave à partir des signaux véhiculés sur chacune des liaisons reliant respectivement le module maître aux modules esclaves ;
- à asservir chaque module esclave en fréquence et en phase sur les données d'une voie, choisie comme voie maître, provenant du module maître ; et
- à partir des signaux d'horloge de base, à générer dans chaque module esclave un nouveau signal d'horloge à une fréquence déterminée, supérieure à leur fréquence d'horloge, véhiculé par la liaison reliant le module esclave au module maître, et à un rythme imposé par l'horloge du module maître.

Selon une autre caractéristique, il consiste pour la synchronisation numérique en émission :
- à détecter le début des trames véhiculées par chaque liaison ; et
- à aligner numériquement le début des trames de chaque voie sur le motif de début de trame émis par le module maître.

Selon une autre caractéristique, il consiste pour la synchronisation analogique en réception :
- à désigner une voie maître parmi l'ensemble des voies formant la liaison reliant chaque module esclave au module maître ;
- à partir des données véhiculées sur la voie maître, à extraire le signal d'horloge émis par le module connecté à la liaison ; et
- à générer un signal d'horloge à une fréquence supérieure à la fréquence du signal d'horloge extrait, pour servir de fréquence d'échantillonnage des signaux de données extraits respectivement des autres liaisons.

Selon une autre caractéristique, il consiste, pour la synchronisation numérique en réception, à aligner numériquement, et au bit près, l'ensemble des débuts des trames des liaisons sur les débuts des trames de la liaison maître, et à une fréquence déterminée correspondant au débit des données véhiculées sur chacune des liaisons.

Selon une autre caractéristique, il y a recouvrement de tous les en-têtes relatifs à chaque liaison.

La présente invention a également pour objet une interface d'interconnexion pour la mise en oeuvre du procédé ci-dessus.

L'interface est caractérisée en ce qu'elle comporte dans chaque module :
- des moyens de multiplexage associés à chaque liaison série, disposés dans la couche physique du module, permettant de répartir les données émises sur la liaison globale à un débit déterminé par le module émetteur, sur un nombre déterminé de liaisons en parallèle ; chaque liaison parallèle véhiculant une partie des données suivant un débit supérieur au débit des blocs de données émis par le module émetteur ; et
- des moyens de démultiplexage du nombre déterminé de liaisons en parallèle véhiculant respectivement les parties de données reçues pour reconstituer les données ayant traversé l'interface d'interconnexion, de façon synchrone et dans leur intégrité, à un débit correspondant au débit admissible par le module récepteur.

Selon une caractéristique, les moyens de multiplexage/démultiplexage comportent un bloc d'émission et un bloc de réception ; le bloc d'émission comportant une pluralité de blocs de génération d'horloge et le bloc de réception comportant une pluralité de blocs de récupération d'horloge ; chaque bloc de génération mettant en oeuvre la logique d'émission pour une liaison déterminée à laquelle il est couplé, le bloc d'émission synchronisant la pluralité de blocs de génération, et chaque bloc de récupération mettant en oeuvre des moyens de réception pour une liaison déterminée, le bloc de réception définissant le domaine d'horloge relatif à la réception du nombre déterminé de liaisons couplées à un même module.

Selon une autre caractéristique, chaque bloc de récupération d'horloge comporte:
- un circuit logique sensible aux fronts du signal de données, véhiculé par la liaison à laquelle il est connectée, permettant d'extraire une fréquence d'horloge pure et sensiblement fixe à partir des données transmises par la liaison ; et
- un dispositif oscillateur verrouillé en phase recevant la fréquence d'horloge issue du circuit logique.

Selon une autre caractéristique, les blocs de réception comportent un dispositif de rattrapage de la dispersion des temps de propagation dans les liaisons parallèles, appelée également skew.

Selon une autre caractéristique, le dispositif de rattrapage de skew comporte :
- des moyens de génération d'une horloge de réception locale à partir du signal reçu de la liaison maître ;
- des moyens de déphasage des signaux reçus des liaisons esclaves ;
- des moyens d'échantillonnage des signaux déphasés, à un rythme imposé par l'horloge de réception locale ;
- des moyens de décalage des signaux échantillonnés sur le signal reçu de la liaison esclave ; les contenus logiques des signaux déphasés correspondant à un décalage de bit défini à un nombre entier déterminé de période STM-N près, où N correspond au niveau d'entrelacement; et
- des moyens définissant une fenêtre de fonctionnement des moyens de déphasage propres à chaque liaison esclave ; les moyens de déphasage étant actifs dans la phase précédant la détection du start bit et bloqués pendant le transfert du reste de la trame.

La synchronisation numérique des trames est réalisée par un alignement numérique des motifs de reconnaissance, appelés ci-après "start bits", contenus dans les débuts de trames agencées selon le protocole de transport de données SDH.

La présente invention exploite la détection de chaque début de trame et la périodicité de ces trames pour réaliser une synchronisation logique fine des informations transportées par les trames.

Un avantage de la présente invention est notamment de séparer les couches logiques de transport des couches physiques d'accès au média.

D'autres avantages et caractéristiques de la présente invention apparaîtront à la lecture de la description qui suit faite en référence aux figures annexées qui représentent:
- la figure 1, le format d'une trame de base selon le protocole SDH ;
- la figure 2a, un chronogramme du rythme de multiplexage des trames de base;
- la figure 2b, un chronogramme du flux de données en relation avec le rythme de multiplexage illustré à la figure 2a ;
- la figure 3, le format d'une trame STM-N multiplexée selon le protocole SDH;
- la figure 4, un schéma d'un multiplexeur-démultiplexeur SDH à N voies ;
- la figure 5, un schéma bloc d'une interface d'interconnexion pour la mise en oeuvre du procédé selon l'invention ;
- la figure 6, un schéma bloc illustrant le principe d'une boucle à asservissement de phase ;
- la figure 7, un schéma bloc illustrant le principe de synchronisation des horloges des modules esclaves sur l'horloge du module maître ;
- la figure 8, un schéma bloc d'un circuit de récupération du signal d'horloge véhiculé sur une voie maître, selon l'invention ;
- la figure 9, un schéma bloc illustrant le traitement de sérialisation des flux de données parallèles à transférer sur la liaison, selon l'invention ;
- la figure 10, le format des motifs de reconnaissance A1, A2 des en-têtes STM-N ;
- les figures 11a et 11b, les chronogrammes illustrant respectivement deux liaisons synchronisées en émission, leurs motifs A1, A2 étant alignés ;
- les figures 12a et 12b, les mêmes liaisons respectivement en réception, et mettant en évidence les décalages de phase des données reçues ;
- la figure 13, un dispositif de rattrapage de skews en réception, selon l'invention ;
- la figure 14, un schéma bloc du comparateur de phase du dispositif de rattrapage de skews de la figure 13 ;
- la figure 15, un schéma bloc du corrélateur de synchronisation du dispositif de rattrapage de skews de la figure 13 ; et
- la figure 16, des chronogrammes illustrant les relations temporelles entre les signaux fondamentaux du dispositif de rattrapage de skews.

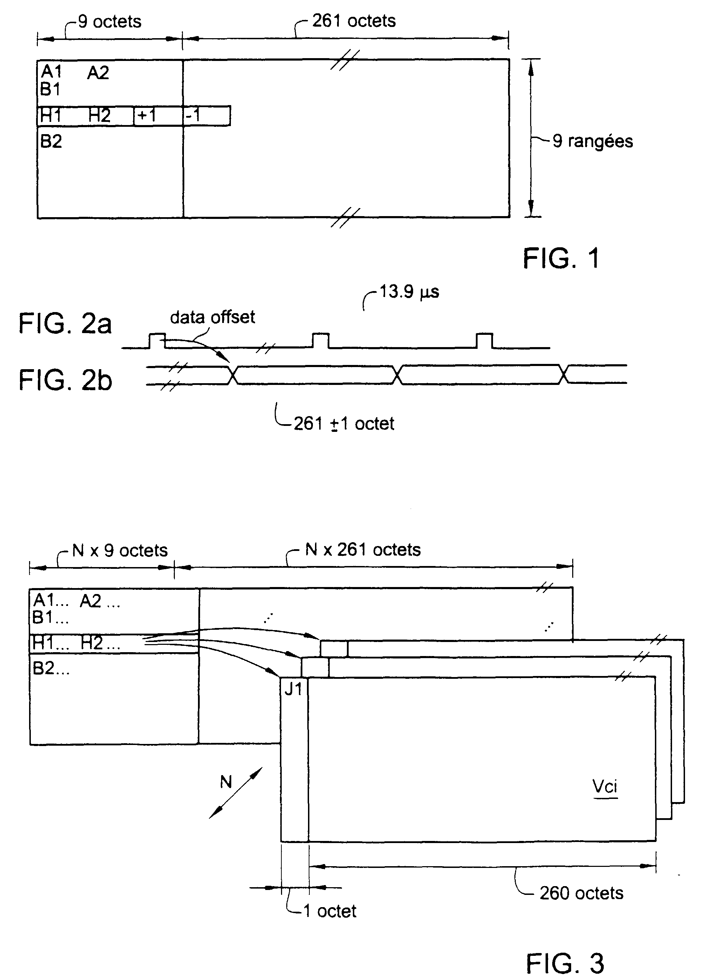

Le principe du protocole SDH étant supposé connu, il sera décrit ci-après dans sa généralité en référence aux figures 1 à 4.

Une première propriété remarquable de ce protocole consiste à imposer une synchronisation en fréquence des horloges de base des différents modules interconnectés entre eux sur une même fréquence nominale de 155,520 MHz et ses multiples par 4.

Les oscillateurs locaux des modules sont asservis suivant un rythme déterminé, reçu par l'un des ports d'entrée/sortie de l'équipement hébergeant chaque module.

Une horloge à haute stabilité de fréquence est implantée sur chaque module qui définit le rythme des transmissions et un module est désigné comme module de référence pour la synchronisation de l'horloge locale des autres modules.

Le protocole SDH prévoit également, en cas de défaillance d'une liaison, de faire appel à une liaison de réserve, une par groupe de deux à quinze liaisons séries élémentaires, et définit les protocoles de reconfiguration de type APS, abréviations anglo-saxonnes pour "Automatic Protection Switching".

Le concept de hiérarchie SDH repose sur une structure de trame particulière appelée "trame de base" dont le format est illustré à la figure 1.

Le rythme de multiplexage par position des trames est illustré par le chronogramme de la figure 2a et le flux de données par le chronogramme de la figure 2b.

Le format d'une trame multiplexée selon le protocole SDH est illustré par la figure 3.

La hiérarchie SDH est obtenue par entrelacement d'un nombre déterminé N de trames de base STM-1, donnant lieu à des débits multiples de 4 fois 155 Mb/s (622 Mb/s, 2,5 Gb/s, ...).

La trame de base repose sur le multiplex STM-1, abréviations anglo-saxonnes pour "Synchronous Transfer Module". Elle est organisée en 9 rangées de 270 octets.

Chaque rangée se décompose en 9 octets d'en-tête et en 261 octets de données pour un débit utile de l'ordre de 140 Mb/s.

Le démarrage de chaque trame est repéré par un motif de synchronisation A1A2 au début de l'en-tête.

Les octets B1, B2 sont des octets de contrôle de parité.

Le multiplexage par position de la SDH est organisé en trames de 125 µs empilées, dites niveaux hiérarchiques STM de niveau N, dont l'unité de base définie par le protocole SDH, associée au multiplex STM-1, est le conteneur virtuel VC-4.

Une composante multiplexée, dite "affluent", dispose d'un espace réservé, appelé "conteneur virtuel VCi", qui dispose d'éléments de pointage et d'exploitation auxquels s'ajoute un octet de justification intervenant en cas d'un décalage de phase. La justification de position par pointeur et l'entrelacement par octets permettent l'accès direct à un affluent.

Comme illustré à la figure 2a, le flux utilisateur est interrompu toutes les 13,9 µs par le flux de contrôle SDH. Une fois sur 9, soit toutes les 125 µs, ce flux de contrôle contient le motif de synchronisation A1A2.

Les pointeurs H1, H2 assurent la justification du rythme du multiplexage et définissent la valeur du décalage entre le conteneur virtuel VCi et la trame.

Les octets ± 1 définissent la zone d'ajustement dynamique des conteneurs à l'intérieur des trames.

Le chronogramme de la figure 2b permet de visualiser le décalage, data offset, entre le conteneur virtuel VCi et la trame.

La figure 3 illustre un entrelacement de niveau N dans lequel un nombre N de pointeurs H1 et H2 pointent respectivement sur N conteneurs virtuels VCi ; chaque conteneur virtuel VCi disposant d'un en-tête contenant un octet Ji définissant le format du conteneur suivant.

La présente invention met en oeuvre deux types de synchronisation :
- une synchronisation analogique en fréquence des horloges de base ; et
- une synchronisation logique des motifs de reconnaissance des débuts de trame sur toutes les liaisons, et par exemple les motifs des début de trame SDH tels qu'ils sont définis dans la recommandation G.708.

La première synchronisation est réalisée à un nombre entier de cycles d'horloge près du point de vu "logique". Cette synchronisation garantit que les différents signaux d'horloge sont en phase. Cependant elle ne permet pas de déterminer le nombre entier de cycles d'horloge nécessaire pour véhiculer l'ensemble des informations à transmettre.

La deuxième synchronisation réalise un alignement numérique des motifs de reconnaissance des débuts de trame SDH sur toutes les liaisons.

Les différences obtenues, en nombre entier de bits, par les dispositifs d'alignement numérique opérant entre la liaison maître et chaque liaison esclave permettent de déduire le nombre de cycles nécessaire à la restitution intégrale des informations transmises.

C'est en exploitant une deuxième propriété remarquable du protocole SDH, qui est d'avoir un moyen d'identification de début d'une trame, que la présente invention définit une référence logique de comptage de bits appelées ci-après "start bit".

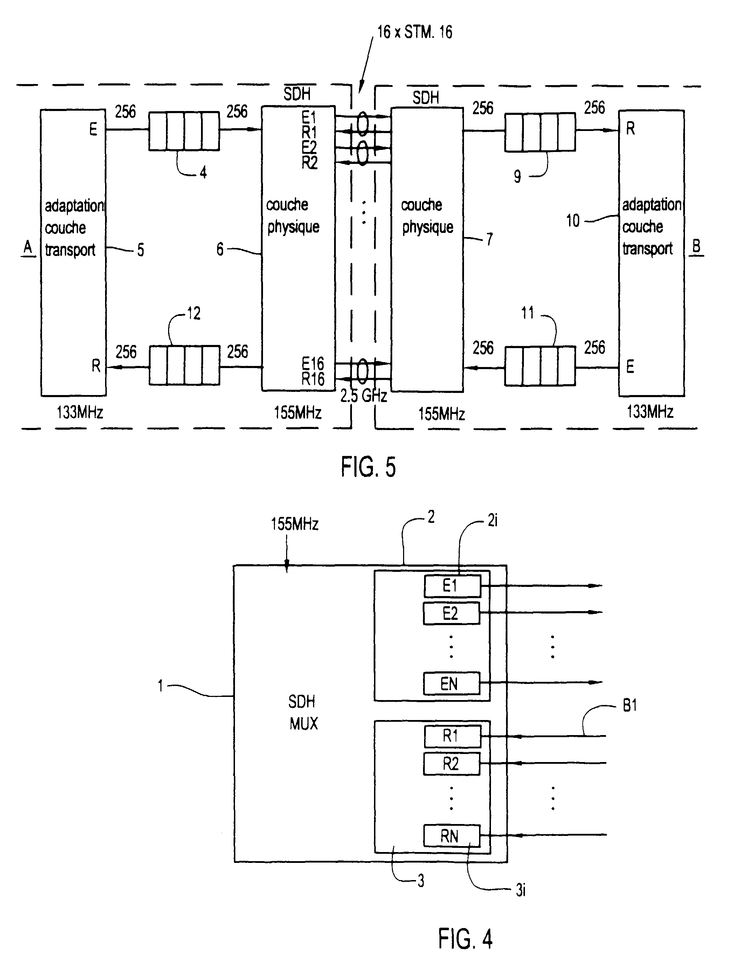

La figure 4 illustre schématiquement un multiplexeur 1 SDH, à N voies fonctionnant à la cadence d'horloge de 155 MHz.

Le terme multiplexeur, MUX, est utilisé pour définir à la fois la fonction de multiplexage et de démultiplexage.

Le multiplexeur 1 comporte un bloc d'émission 2 et un bloc de réception 3 qui comportent respectivement des blocs de génération 2i de signal d'horloge et des blocs de récupération 3i de signal d'horloge.

Les blocs de génération 2i utilisés dans la présente description mettent en oeuvre la logique d'émission SDH pour une liaison STM-16.

Le bloc d'émission 2 contient et synchronise l'ensemble des blocs de génération 2i émettant vers un même module.

Les blocs de récupération 3i mettent en oeuvre les circuits de réception SDH pour une liaison STM-16.

Le bloc de réception 3 définit le domaine d'horloge relatif à la réception de l'ensemble des liaisons STM-16 d'un même module.

Au cours de l'initialisation du système, une voie particulière est choisie dans le module maître pour chaque liaison avec un module esclave. Cette voie est la voie maître pour la liaison correspondante.

Les horloges d'émission des voies esclaves sont toutes dérivées de l'horloge d'émission de la voie maître choisie. En particulier, les fréquences sont égales et les éventuels déphasages sont parfaitement maîtrisés, dans le domaine d'horloge du bloc d'émission.

Le bloc de récupération 3i extrait le signal d'horloge véhiculé par la liaison et exécute un décodage du code ligne CMI, abréviations anglo-saxonnes pour "Coded Mark Inversion". Le signal issu du décodeur CMI représente les données reçues en code NRZ, abréviations anglo-saxonnes pour "Non-Return to Zero".

Le code CMI est défini dans les recommandations ITU-T.

Ce type de codage a pour avantage :
- la simplicité ;
- il comporte au moins une transition de niveau dans chaque intervalle 3T/2 , où T correspond à la période d'un bit;
- une facilité de récupération du signal d'horloge par un dispositif à verrouillage de phase, ou PLL, abréviations anglo-saxonnes pour "Phase Locked Loop" ; et
- une absence de composante continue, donc des liaisons possibles par condensateur ou transformateur haute fréquence.

Dans l'exemple de réalisation présenté, considérant des liaisons série STM-16 selon le protocole SDH, où le nombre 16 correspond au niveau N d'entrelacement de la trame de base STM-1, chaque liaison est donc capable de véhiculer des débits de 2,5 Gb/s.

Pour une unité logique correspondant à un mot de 256 bits, le procédé selon l'invention permet par exemple d'émettre ce mot sur 16 liaisons STM-16 en parallèle.

Le schéma bloc de la figure 5 illustre un exemple de 16 liaisons STM-16 véhiculant chacune des débits de 2,5 Gb/s entre deux modules A et B par paquets ou mots de 256 bits. Les modules A et B sont délimités respectivement par une ligne ouverte discontinue. Les modules A et B sont par exemple des modules multiprocesseurs.

Le temps nécessaire à la transmission et à la reconstitution des messages transmis dépend directement du débit maximum admissible par les liaisons reliant les modules A et B entre eux.

Dans cet exemple, le module A émet des mots de 256 bits en entrée d'une première mémoire FIFO 4, abréviations anglo-saxonnes pour "First Input First Output", à partir d'un bloc d'adaptation couche transport 5, à une cadence d'horloge de 133 MHz.

Il y a une relation à respecter entre la largeur "bit" de l'interface parallèle de transport, la largeur "bit" de l'interface série physique, c'est-à-dire le nombre de voies série de la liaison, et les fréquences d'horloge physique et de transport pour optimiser l'usage des ressources du système.

Cette relation peut s'exprimer par l'égalité suivante :

Largeur "bit" de l'interface parallèle∗fréquence de l'horloge de transport = largeur "bit" de l'interface série∗fréquence de l'horloge physique de la liaison.

Cependant, cette égalité ne peut être réalisée de manière absolument exacte. La couche de transport rajoute donc à l'émission, des messages de type "idle" chaque fois que les messages utiles ne saturent pas le débit de la couche physique. Ces messages "idle" sont ensuite simplement éliminés du flux par la couche transport de réception.

Les mots émis par le module A sont transmis au bloc couche physique 6 du module A à une cadence d'horloge de 155 MHz puis transmis au bloc couche physique 7 du module B, via la liaison SDH, à une cadence d'horloge de 2,5 GHz.

Les messages reçus par le bloc couche physique 7 du module B sont ensuite transmis sous forme de mots de 256 bits en entrée d'une deuxième FIFO 9, à une cadence d'horloge de 155 MHz, puis au bloc adaptation couche transport 10 du module B qui reçoit le message, à une cadence d'horloge de 133 MHz.

De façon symétrique, le module B émet des mots de 256 bits à travers une troisième mémoire FIFO 11, à partir du bloc d'adaptation couche transport 10, à une cadence d'horloge de 133 MHz.

Les mots émis par le module B sont transmis au bloc couche physique 7 à une cadence d'horloge de 155 MHz puis transmis au bloc couche physique 6 du module A, via la liaison SDH, à une cadence d'horloge de 2,5 GHz.

Les messages reçus par le bloc couche physique 6 du module A sont ensuite transmis sous forme d'un mot de 256 bits, à travers une quatrième FIFO 12, à une cadence d'horloge de 155 MHz au bloc adaptation couche transport 5 du module A qui reçoit le message à une cadence d'horloge de 133 MHz.

Les différents organes décrits ci-dessus définissent une interface physique d'interconnexion entre deux modules A et B, reliés entre eux par une pluralité de liaisons série point-à-point, véhiculant respectivement des trames de données émises et reçues par chaque module.

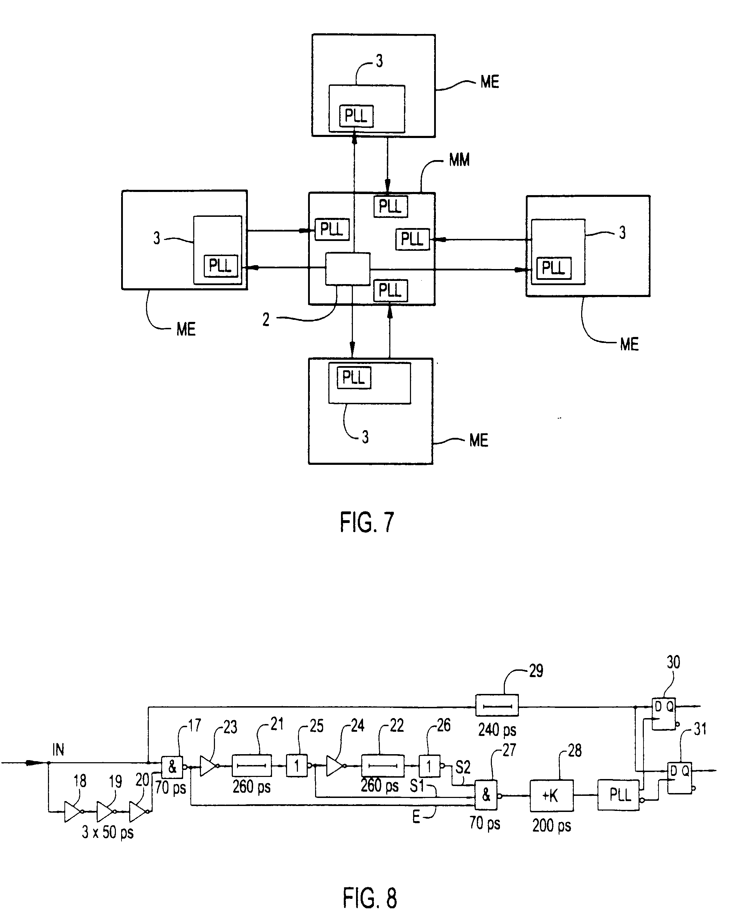

La figure 6 illustre un schéma bloc d'une boucle à asservissement de phase, PLL, recevant le signal issu d'un bloc de mise en forme Ri, délimité par une ligne fermée discontinue. Le bloc de mise en forme R1 reçoit en entrée le signal B1 et le signal d'horloge FREE CLK.

Le dispositif oscillateur, PLL, délimitée par une ligne fermée discontinue, comporte de l'entrée vers la sortie, et en série, un détecteur de phase/fréquence 13 recevant sur une première entrée le signal délivré par le bloc de mise en forme R1, un dispositif de filtrage passe-bas 14 et un VCO 15 à 2,5 GHz, abréviations anglo-saxonnes pour "Voltage Controlled Oscillator", verrouillé en phase à la fréquence de 2,5 GHz.

La sortie du VCO 15, correspondant également à la sortie du dispositif oscillateur, PLL, est rebouclée sur une deuxième entrée du détecteur 13 via un diviseur logique par K 16. La sortie du dispositif oscillateur, PLL, délivre un signal d'horloge de base appelé également signal de réception locale C1.

La synchronisation des horloges de base en émission s'effectue comme suit en référence à la figure 7 :
- les oscillateurs du bloc d'émission 2 du module maître MM reçoivent la même horloge issue d'un oscillateur à quartz ;
- le rythme d'horloge du module émetteur est véhiculé par la voie maître de chaque liaison SDH en même temps que les données émises par le module ;
- le PLL du bloc de réception 3 de chaque module esclave ME s'asservit en fréquence et en phase sur les données provenant du module maître MM ; et
- les horloges d'émission des modules esclaves ME sont dérivées des PLL de leur bloc de réception 3 par un PLL d'émission analogique classique.

Le schéma bloc de la figure 8 illustre un circuit haute fréquence permettant d'extraire le rythme d'horloge du flux de données circulant sur une ligne série STM-16 codée suivant le codage CMI évoqué ci-dessus.

On appelle cellule l'intervalle de temps T à l'intérieur duquel est codé un élément d'information.

Le code CMI est défini par les règles de codage suivantes :
- un "0" est représenté par une transition descendante en milieu de cellule ; et
- un "1" est représenté par un état stable pendant la cellule ; cet état alternant entre haut et bas à chaque bit "1" en entrée.

Une suite de "0" est donc représentée par un signal carré de période T, et une suite de "1" par un signal carré de période 2T.

Ce type d'encodage n'est pas le plus performant en termes d'occupation spectrale mais convient bien dans le contexte de l'exemple décrit.

En particulier, il est possible d'exploiter la conséquence suivante des règles de codage CMI pour la récupération de l'horloge à 2,5 GHz:
- les seules transitions montantes sont situées en début de cellule ; et
- l'intervalle maximum entre deux transitions montantes est égal à 3T, dans le cas "101" avec le premier "1" codé sur l'état haut.

Selon la figure 8, le signal encodé IN est dérivé par une porte NAND 17 et une série de trois inverseurs 18, 19, 20. Chaque transition montante génère une impulsion négative de 150 ps. Ces impulsions sont appliquées à deux lignes à retard électroniques 21 et 22, du type de celles décrites dans le brevet EP 0 562 904 B1, mises en série.

Chaque ligne à retard 21 et 22, associées à ses buffers d'entrée, respectivement 23 et 24; et de sortie éventuels, respectivement 25 et 26, est réglée pour un retard de T, soit 400 ps dans l'exemple décrit.

L'entrée E et les deux sorties respectives Si et S2 des buffers de sortie 25 et 26 sont sommées par une porte NAND 27 à trois entrées E, S1, S2 qui génère des impulsions positives de 150 ps de largeur, à la fréquence de 2,5 GHz. Ce signal est divisé par un diviseur binaire par K 28, avec K valant typiquement 2 à 8, pour se ramener à un signal carré dont la fréquence est compatible avec le circuit classique du comparateur de phase 13 du bloc PLL.

Enfin, une ligne à retard 29 de 240 ps ajuste la phase du signal d'entrée encodée pour garantir un échantillonnage correct par l'horloge récupérée.

Les deux bascules 30 et 31, à droite sur la figure 8, correspondent respectivement aux étages d'entrée d'un décodeur CMI classique non représenté. Ils reçoivent respectivement sur leur entrée D le signal délivré par la ligne à retard 29, et sur leur entrée d'horloge le signal d'horloge délivré par le bloc PLL : signal direct pour la bascule 30 et signal complémentaire pour la bascule 31.

L'échantillonnage du signal encodé IN, sur les fronts montants et descendants de l'horloge récupérée, permet de distinguer le "0" pour lequel il y a un changement d'état, et le "1" pour lequel l'état reste stable.

Le réglage fin de la phase entre l'horloge récupérée et le signal d'entrée s'effectue pendant la phase d'initialisation de la liaison maître.

Les moyens d'initialisation, non détaillées, peuvent trouver le réglage de la ligne à retard 29 en émettant une suite de "1" sur la ligne, en cherchant les limites de fonctionnement du circuit de récupération 3i, c'est-à-dire les réglages pour lesquels des "0" apparaissent en sortie, et en choisissant la valeur médiane du retard.

Après avoir synchronisé les horloges de base en émission, les données délivrées par le multiplexeur 1 de la liaison SDH à la fréquence d'horloge de 155MHz, subissent un traitement dit de "sérialisation" visant à transformer les 16 flux de 16 bits en parallèle, en 16 liaisons STM-16 à la fréquence de 2,5 GHz.

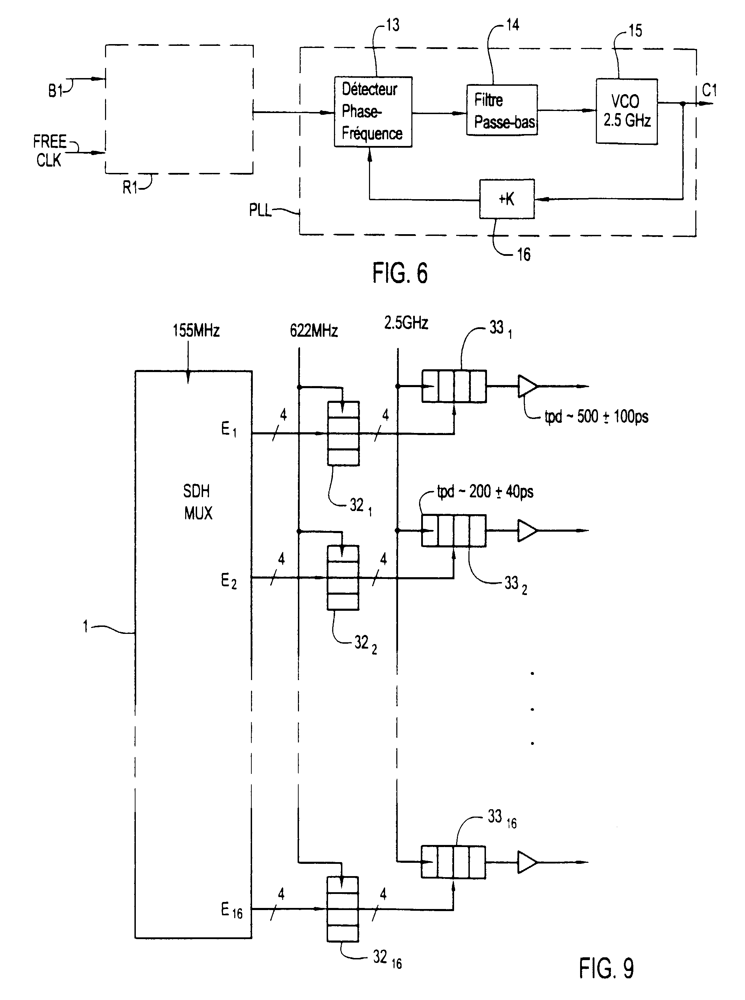

Le traitement de sérialisation, dont les principaux moyens sont illustrés schématiquement par le bloc diagramme de la figure 9,consiste à décomposer les flux, ou mots de 16 bits, en mots de 4 bits et à les charger respectivement dans des premier et deuxième registres à décalage.

Pour cela, dans une première étape, la mémorisation des premiers mots de 4 bits est effectuée à la fréquence d'horloge de 622 MHz dans les premiers registres 32i puis dans une deuxième étape, les deuxièmes mots de 4 bits sont chargés dans les deuxièmes registres 33i à la fréquence d'horloge de 2,5 GHz.

La figure 9 indique quelques valeurs typiques de dispersions temporelles, tpd, avec la technologie HCMOS-8 qui fait référence aux composants semiconducteurs dont la géométrie est inférieure ou égale à 0,18 µm.

Il n'est pas nécessaire de régler de manière très fine le skew dans les blocs d'émission 2i, celui-ci étant très inférieur aux valeurs des dispersions rencontrées dans les câbles.

La logique d'émission à 2,5 GHz se limite donc à quelques composants de circuits logiques et reste donc maîtrisable du point de vue de son encombrement dans les ASICs, abréviation anglo-saxonne pour "Application Specific Integrated Circuit".

Après avoir synchronisé analogiquement les horloges de base en émission et transformé les données émises, parallèles en série, le procédé selon la présente invention consiste à synchroniser numériquement les trames émises par les liaisons STM-16.

La synchronisation numérique a pour but d'aligner les trames sur toutes les liaisons, au bit près, et à la fréquence de 2,5 GHz.

Pour cela, le procédé consiste à utiliser le start bit contenu dans l'en-tête de la trame STM-N et émis par la voie maître, pour synchroniser les voies esclaves.

Les circuits correspondants ne sont pas détaillés. La synchronisation consiste à bloquer les multiplexeurs 1 esclaves jusqu'à l'occurrence du signal de synchronisation émis par la voie maître.

Cette synchronisation assure un recouvrement de tous les en-têtes des trames relatifs à chaque voie.

Le temps de transmission de chaque en-tête est indépendant du niveau d'entrelacement N et présente un ordre de grandeur supérieur à la dispersion entre voies, dans l'exemple décrit 150 ns par rapport à ± 4 ns.

Pour la voie de retour, chaque module esclave ME cale, avec un déphaseur synchronisé sur son horloge locale, son start bit d'émission sur le start bit reçu du maître.

La partie analogique d'un tel déphaseur est notamment décrite dans le brevet européen EP 0 562 904 B1 déposé par la demanderesse.

La détection du start bit est effectuée, quelque soit le niveau N d'entrelacement, par la transition entre deux octets consécutifs déterminé, respectivement A1 et A2, et appelé motif A1A2.

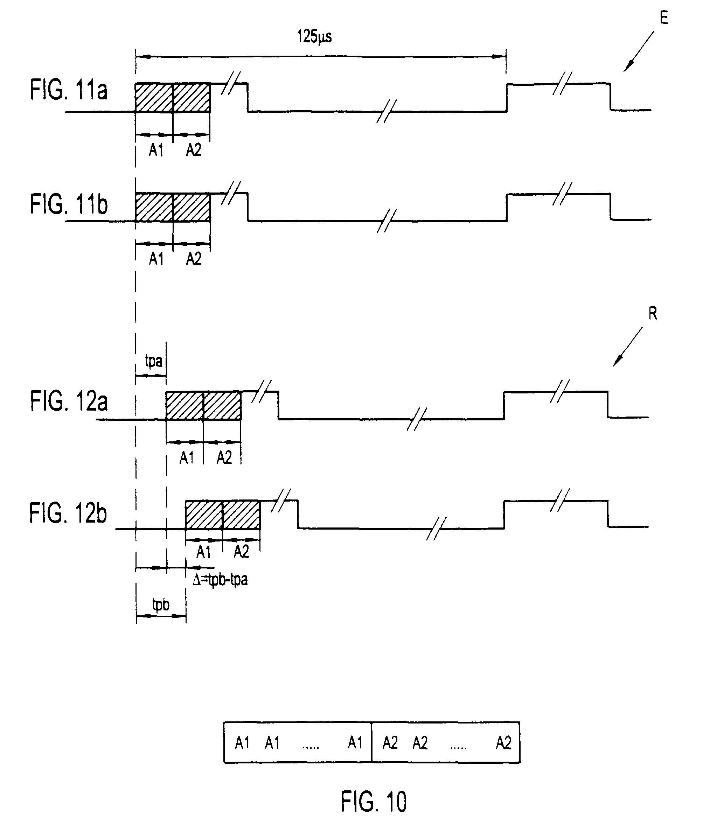

Le format des octets de synchronisation des en-têtes pour des trames STM-N, est défini par la recommandation G.708 de l'ITU et est illustré à la figure 10.

Pour une trame STM-N, les octets A1 et A2 sont répétés 3∗N fois au début de chaque trame, où N est le niveau d'entrelacement des trames.

Le premier octet A1 a par exemple une valeur de 1111 0110 (F6 en hexadécimal) et le deuxième octet A2 a par exemple une valeur de 0010 1000 (28 en hexadécimal). On obtient donc le motif de synchronisation suivant pour STM-16 :
48 fois 1111 0110 concaténés avec 48 fois 0010 1000.

Après une mise en série des données, l'ensemble des données émises est embrouillé par un générateur de données pseudo-aléatoires, à l'exception des 2(3∗N) premiers octets d'en-têtes. La probabilité pour que les données embrouillées contiennent le motif A1A2 est alors infime.

Une nouvelle synchronisation sur l'en-tête suivant est déclenchée à l'intérieur d'une fenêtre temporelle générée à partir de l'en-tête précédent, rendant quasiment nulle la probabilité de trouver un doublage du code synchronisation.

Un dispositif, non représenté, pour la détection des transitions entre la suite d'octets A1 et la suite d'octets A2, comporte par exemple un comparateur 16 bits comparant les données issues du traitement de mise en série avec le motif constant A1A2.

La généralisation à STM-N de la définition de l'en-tête SDH rend indépendante la position du start bit dans le temps et dans le flux des données.

De même, la fenêtre temporelle et la position temporelle de la transition entre le motif A1 et A2 à l'intérieur de la fenêtre sont indépendantes du niveau d'entrelacement N.

Pour résumer les opérations effectuées pour synchroniser les trames en émission, le procédé selon l'invention consiste, dans une première étape, à caler analogiquement l'horloge d'émission esclave sur l'horloge de réception régénérée à partir de la voie maître reçue du module maître, et dans une deuxième étape, à aligner numériquement les start bits esclaves sur les start bits maître.

La synchronisation en émission met en oeuvre des circuits fonctionnant aux fréquences hautes, typiquement supérieures ou égales à 2,5 GHz (PLL, registres à décalage,...). Ces circuits sont techniquement maîtrisés et peuvent être réalisés en technologie HCMOS-8 pour les intégrer dans un ASIC supportant également les autres fonctionnalités de l'interface d'interconnexion.

Par ailleurs, les autres circuits logiques utilisés sont élémentaires dans leur conception et de faible surface pour les technologies employées.

Autant la synchronisation à l'émission peut paraître d'un abord aisé (tous les paquets de données sont émis en même temps), autant la synchronisation en réception peut paraître insurmontable quand il faut pouvoir gérer les paquets arrivant en ordre dispersé, en parallèle, et pour reconstituer dans leur intégrité les informations émises via les 16 liaisons STM-16.

Les figures 11a et 11b illustrent respectivement deux liaisons synchronisées en émission ; leurs motifs de reconnaissance de début de trame A1 étant alignés aux tolérances de la figure 9 près.

Les figures 12a et 12b illustrent respectivement les mêmes liaisons en réception, et mettent en évidence les décalages de phase des données reçues.

Selon l'invention, le principe de la synchronisation en réception consiste à récupérer les signaux d'horloge de chaque liaison en provenance d'un module déterminé dès la réception, de façon à rendre unique, le plus tôt possible, l'horloge du module récepteur.

On considérera dans un premier temps, la synchronisation analogique de l'horloge physique de réception et, dans un deuxième temps, l'alignement numérique des start bits reçus via des liaisons en provenance d'un même module déterminé.

On part de l'hypothèse que les voies étant issues du même module, les variations d'origine dynamique des périodes d'horloges relatives à chaque voie sont identiques d'une voie à l'autre.

Il ne reste alors à l'arrivée que des variations de période d'origine statique qui sont fonction des conditions mécaniques et électriques spécifiques à chaque voie.

Les gigues, ou "jitters" en terminologie anglo-saxonne, peuvent être alors considérées comme ne faisant intervenir que des variations du second ordre ; le rapport signal sur bruit thermique, lié à l'atténuation des signaux dans les lignes de transmission, étant très élevé dans le cas des liaisons courtes concernées.

Le module esclave ME est supposé déjà synchronisé sur le module maître MM à l'émission.

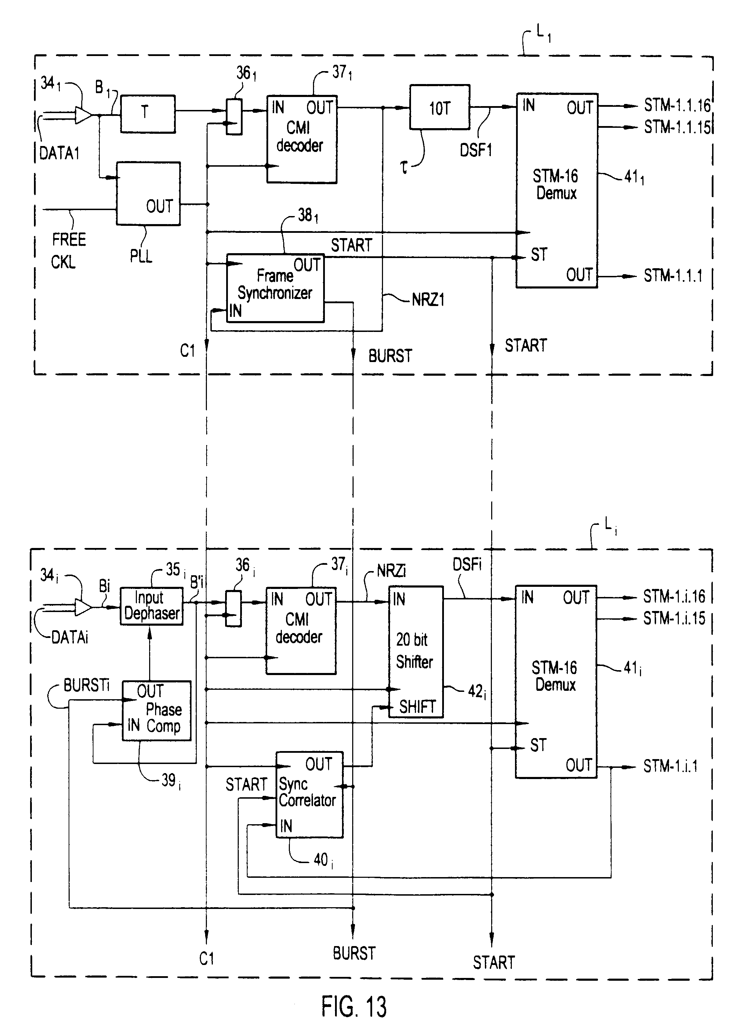

La figure 13 illustre un dispositif de rattrapage des skews implanté dans un bloc de réception 3.

Parmi l'ensemble des liaisons Li arrivant sur le bloc de réception, une liaison L1 véhiculant les données DATA1, est désignée comme la liaison maître parmi les 16 liaisons STM-16.

Le signal d'horloge B1 reçu par le bloc de réception 3 est extrait des données reçues DATA1 et est ensuite transformé en signal d'horloge de base, ou de réception locale, C1, par un circuit de récupération d'horloge 3i tel que celui décrit ci-dessus et illustré à la figure 8. La liaison maître L1 impose alors aux autres liaisons Li le signal d'horloge maître C1.

Pour les autres liaisons Li, les signaux d'horloge Ci ne sont pas extraits des données reçues DATAi mais les signaux Bi supportant les données DATAi reçues sont déphasés de façon à pouvoir être échantillonnés au rythme imposé par l'horloge maître C1 de la liaison maître L1.

Le problème de l'implantation de plusieurs PLL sur le même ASIC, connu pour être technologiquement difficile, est ainsi évité.

Le fonctionnement du dispositif de rattrapage des skews est décrit ci-après en référence à la figure 13 :
Des amplificateurs différentiels 34i transforment les signaux analogiques véhiculés par le câble d'interconnexion reliant les deux modules en signaux logiques B1 à Bi.
Un PLL s'asservit en permanence sur le signal B1 de la liaison maître et génère l'horloge de réception locale C1. Cette horloge est distribuée, éventuellement au moyen d'amplificateurs non représentés, dans le domaine d'horloge du bloc de réception 3.
Des déphaseurs 35i, utilisés sur les liaisons esclaves, permettent de retarder de 0 à 2T les signaux Bi ; T représentant la période bit des signaux sur le câble.

Ces déphaseurs 35i peuvent être réalisés selon l'invention décrite dans le brevet EP 0 562 904 B1, intitulé : procédé et dispositif de réglage de retard à plusieurs gammes.

Pour des raison de symétrie, l'entrée maître est équipée du même dispositif.

Le réglage est fixé arbitrairement à la valeur T, symbolisé sur la figure 13 par le bloc T, et les phases des signaux Bi sont alors réglables de 0 à T de part et d'autre de la valeur centrale définie par la phase de B1.

Des bascules 36i, ou "latches" en terminologie anglo-saxonne, synchronisent les signaux B1 à Bi sur l'horloge C1 et éliminent ainsi toutes les dispersions de temps à l'intérieur d'une période T.

Des décodeurs CMI 37i transforment les signaux binaires issus des bascules 36i en signaux NRZ. Les circuits correspondants font partie de l'état de l'art et ne sont donc pas décrits.

Sur la figure 13, le signal BURST est un "bundle" en terminologie anglo-saxonne, c'est-à-dire un groupe de signaux BURST.1 à BURST.n. Ces signaux sont générés par des décodages de l'état du démultiplexeur 1 STM-16 et sont synchrones avec l'horloge C1. Cette représentation est utilisée pour améliorer la lisibilité de la figure ; les détails de différentiation sont donnés dans la description qui suit.

Le signal NRZ1 de la liaison maître entre sur la borne IN d'un synchroniseur de trame 38₁. Ce bloc de logique synchrone est piloté par l'horloge C1 et génère les signaux START qui définissent la transition entre les octets A1 et A2, et le signal BURST.1 ou MSYNC qui correspond à une salve de deux impulsions à une fréquence 1/4T dans la réalisation présentée, distribuée vers des comparateurs de phase 39i des liaisons esclaves.

Chaque comparateur de phase 39i effectue la mesure du décalage entre le signal B'i, issu du déphaseur 35i, et le signal MSYNC, issu du synchroniseur de trame 38₁, et mémorise dans un registre de sortie la valeur correspondante jusqu'à la trame suivante soit 125 µs plus tard. Ces valeurs numériques sont ensuite présentées sur les entrées de commande des déphaseurs 35i.

Pour chaque liaison esclave, le signal START issu du synchroniseur de trame 38₁ entre sur un bloc corrélateur de synchronisation 40i. Le démultiplexeur 1 STM-16 de la liaison Li fournit le signal STM-1.i.1 sur l'entrée IN du corrélateur 40i. Les circuits correspondants font partie de l'état de l'art et ne sont donc pas décrits.

Le signal STM-1.i.1 possède le format d'une trame STM-1 de base à 155 Mb/s. Le corrélateur 40i détermine l'instant de transition A1, A2 de cette trame et le compare au signal START issu du synchroniseur de trame 38₁ de la liaison L1.

Le corrélateur 40i fonctionne au rythme de l'horloge C1. Les compteurs internes du corrélateur 40i peuvent , par exemple, mesurer un déphasage de 0 à 20 périodes C1. Le résultat de cette mesure est mémorisé dans un registre de sortie. Cette valeur est réactualisable toutes les 125 µs.

Pour chaque voie esclave, un circuit de décalage de bit 42i, ou "shifter" en terminologie anglo-saxonne, reçoit sur une première entrée le signal de sortie NRZi du décodeur CMI 37i et décale ce signal d'une valeur déterminée correspondant au résultat de la mesure du déphasage contenu dans le registre de sortie du corrélateur 40i. Cette valeur de décalage, ou signal de commande, est injectée sur une deuxième entrée SHIFT du shifter 42i correspondant à l'entrée de commande d'un multiplexeur interne, non représenté. Le décalage est donc fait dans l'exemple décrit sur 20 bits.

Le shifter 42i génère sur sa sortie, un signal DSFi véhiculant la trame STM-16 réalignée. Ces signaux sont ensuite transmis aux entrées IN des blocs de démultiplexage SDH 41i. Pour la liaison maître, le signal DSF1 est le signal NRZ1 retardé d'un retard déterminé τ = 10T.

Les démultiplexeurs 41i désentrelacent les trames STM-1 qui composent la trame STM-16 et fournissent à la sortie du bloc de réception 3 les 256 signaux d'entrée de la couche transport non détaillée dans la présente description.

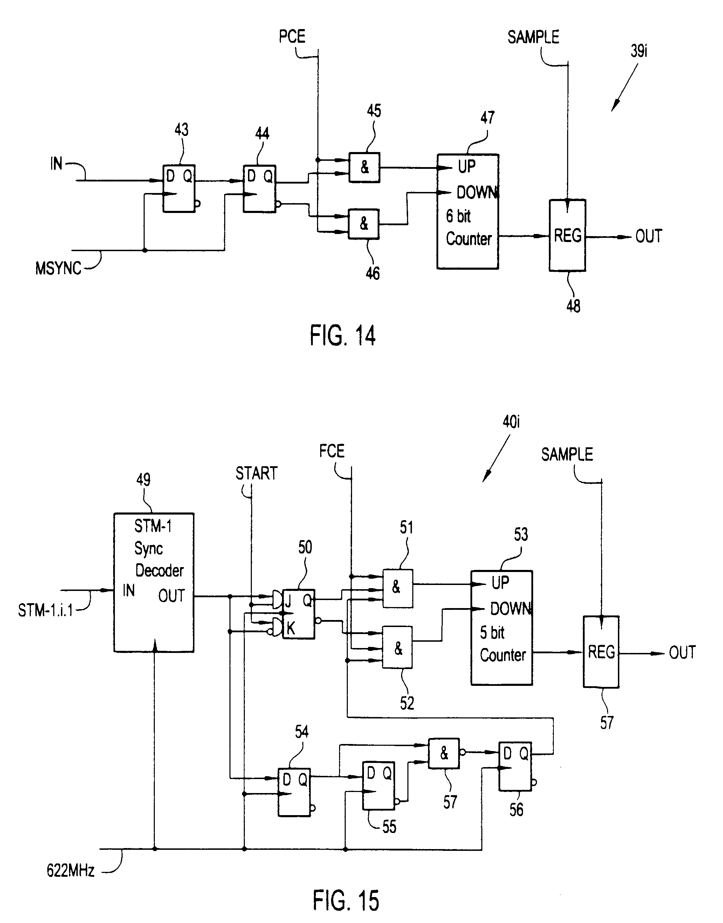

Le comparateur de phase 39i et le corrélateur de synchronisation 40i sont décrits ci-après respectivement en référence aux figures 14 et 15.

Comme illustré à la figure 14, une première bascule 43 reçoit sur son entrée D le signal sortant du déphaseur analogique 35i et sur son entrée d'horloge le signal MSYNC, correspondant au signal BURST.1, sortant du synchroniseur de trame 38₁. Cette bascule 43 permet de déterminer si la phase du signal de la liaison esclave est en avance ou en retard par rapport à la salve de référence MSYNC.

Une deuxième bascule 44 resynchronise le signal issu de la première bascule 43. La deuxième bascule 44 a pour effet de minimiser les éventuels effets de "métastabilité" apparaissant dans le cas où la sortie du compteur 47 évolue au même instant que le signal MSYNC.

Le signal PCE, abréviations anglo-saxonnes pour "Phase Count Enable", qui correspond au signal BURST.3, est généré par le synchroniseur de trame 38₁ et permet de prendre en compte l'état de la deuxième bascule 44 à travers une première et deuxième portes logiques ET, respectivement 45 et 46, pour faire avancer ou reculer un compteur 47. Ce compteur 47 évolue donc toutes les 125 µs. Pour un déphaseur dont l'amplitude de réglage vaut 2 périodes T de 0,4 ns, si on choisit un compteur à 6 bits, chaque pas du compteur 47 représente un temps de l'ordre de 12 ps.

Un signal SAMPLE, ou BURST .4, est généré par le synchroniseur de trame 38₁ et mémorise la valeur du compteur 47 dans un registre de sortie 48. La sortie OUT de ce registre 48 détermine la valeur du retard engendré par le déphaseur 35i.

Comme illustré à la figure 15, le corrélateur de synchronisation 40i comporte un décodeur de synchronisation STM-1 49.

Le circuit correspondant fait partie de l'état de l'art et n'est donc pas décrit en détail. Il fonctionne au rythme du signal d'horloge à 622 MHz issu du synchroniseur de trame 38₁ et reçoit sur son entrée IN le signal série STM-1.i.1, qui est le canal 1 de la liaison STM-16. Le décodeur 49 génère un signal OUT qui permet de déterminer la position du start bit du canal.

Une première bascule 50 est une bascule JK à entrées conditionnées. Elle permet de déterminer si le start bit généré par le décodeur 49 est en avance ou en retard par rapport au start bit de la liaison maître, porté par le signal START de la figure 13.

Un signal FCE, abréviations anglo-saxonnes pour "Frame Count Enable", ou BURST.5, est généré par le synchroniseur de trame 38₁ et permet de prendre en compte l'état de la première bascule 50 à travers une première et une deuxième portes ET, respectivement 51 et 52, pour faire avancer ou reculer un compteur 53.

Une série de bascules 54, 55, et 56 et une porte NAND 57 détectent la coïncidence de temps entre les deux start bits et inhibent les sorties des première et deuxième portes ET, 51 et 52.

Le compteur 53 évolue toutes les 125 µs jusqu'à la synchronisation complète puis reste immobile. Le temps maximum de synchronisation est dans l'exemple décrit de 20 fois 125 µs.

Le signal SAMPLE, ou BURST.4, est généré par le synchroniseur de trame 38₁ et mémorise la valeur du compteur 53 dans un registre 57. La sortie OUT de ce registre détermine la valeur du retard engendré par le shifter 42i associé.

La synchronisation analogique des liaisons Li en provenance d'un même module étant réalisée, le procédé selon l'invention consiste ensuite à aligner numériquement les start bits à l'intérieur du bloc de réception.

Pour cela, dans le bloc de réception 3, les start bits relatifs aux trames STM-16 sont alignés numériquement sur le start bit maître.

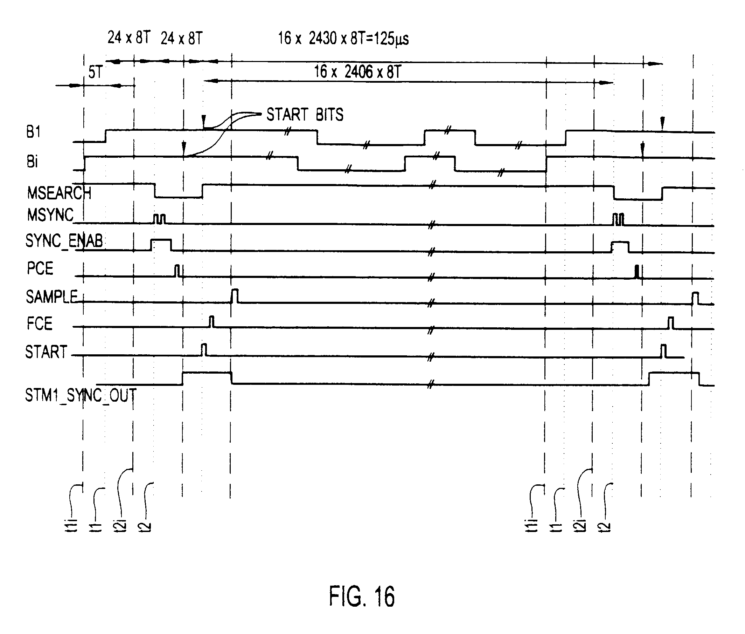

La figure 16 représente les chronogrammes pour un exemple de "timing" entre la voie maître et l'une des voies esclaves.

Au niveau ligne, le signal Bi est en avance de 5 bits par rapport à B1. Les 48 octets de synchronisation A1 commencent en t1 pour la liaison maître et en t1i pour la liaison esclave.

Cet exemple de "timing" se situe pendant la phase d'alignement numérique entre les deux voies.

Le signal MSEARCH est généré par un compteur synchrone de B1, non représenté. Il permet de calculer au bit près la position médiane de la suite d'octets A1, représentée par l'instant t2. Le start bit se trouve 24 octets après.

Le signal MSYNC est la salve de référence, dérivée du signal B1, permettant au circuit de la figure 14 d'effectuer l'alignement de phase à l'intérieur du temps T, égal à 400 ps dans l'exemple décrit.

La complexité modeste des circuits permet, avec les technologies considérées, de concentrer l'implantation de 16 blocs d'alignement sur une surface de silicium inférieure au mm², garantissant ainsi un contrôle de skew entre ces blocs à mieux que 5 ps près.

Le signal SYNC_ENAB encadre la salve MSYNC. Le signal PCE fait avancer ou reculer le compteur de la figure 14.

Le signal SAMPLE mémorise dans les registres de sortie 48 et 57 des dispositifs 39i et 40i, illustrés respectivement par les figures 14 et 15, les nouvelles valeurs des variables d'alignement. Le signal FCE fait avancer ou reculer le compteur 53 de la figure 15.

Le signal START, issu du bloc de synchronisation trame 38₁ de la liaison maître L1, reste en phase avec l'instant t1.

Dans l'exemple choisi, le signal STM1_SYNC_OUT, généré par le décodeur STM-1 49 de la figure 15, est synchrone, à gauche de la figure 16, avec le start bit du signal Bi. A droite de la même figure, il est retardé par le dispositif d'alignement numérique en direction du start bit de la liaison maître. Les différents chronogrammes ne sont pas à l'échelle.

Dans un SAN, abréviations anglo-saxonnes pour "System Area Network", pour multiprocesseur, les temps de propagation sont typiquement de l'ordre de 10 ns, et l'incertitude sur ce temps de propagation est de l'ordre de ±4 ns soit ±40 % ; les 10 ns étant dus principalement à la longueur câble.

Le principe d'alignement en émission, décrit précédemment, garantit que l'écart maximal entre la réception d'un start bit esclave et le start bit maître restera inférieur aux dispersions inter-voies.

La capacité des FIFOs de réception est typiquement de l'ordre de 32 bits par liaison STM-16, cette valeur dépendant du temps de réaction de la couche de transport face aux interruptions de flux engendrées par les en-têtes SDH.

En mode de fonctionnement normal, les pointeurs des en-tête de trames SDH gardent une valeur constante.

En cas de perte de synchronisation sur l'horloge maître, le mécanisme des pointeurs du protocole SDH permettant d'absorber les écarts de fréquence, est mis en oeuvre. La mise à jour des pointeurs est strictement identique pour chaque voie, l'écart étant le même pour toutes les voies au niveau couche physique d'une liaison.

Ce mode de fonctionnement peut être aussi mis à profit pour faire communiquer deux modules par une liaison plésiochrone, c'est à dire dont les horloges de base sont très voisines, sans toutefois être synchronisées, par exemple pour le cas où l'on interface un système informatique avec un système de communications de données sans pouvoir agir sur les horloges de base du second.

L'invention s'applique également dans le cas où un nombre M de voies STM-N issues d'un module sont à nouveau multiplexées et démultiplexées par des noeuds de type WDM, abréviations anglo-saxonnes pour "Wavelength Division Multiplexer".

Les équipements WDM utilisent, côté multiplexeur, un nombre M de lasers décalés de quelques dizaines de GHz, émettant simultanément sur la même fibre, et, côté démultiplexeur 1, un dispositif optique séparant le faisceau reçu vers un nombre M de photodétecteurs.

Le skew entre les différentes voies d'un tel multiplexeur, relativement indépendant de la longueur de la liaison, est compatible avec les valeurs pour lesquelles le dispositif présenté fonctionne.

Avec la technologie WDM, il est alors possible d'étendre à plusieurs kilomètres la longueur de la liaison parallèle décrite ici, car les problèmes d'atténuation sont éliminés.

Enfin, la présente invention n'est pas limitée à la seule exploitation du protocole SDH et est compatible avec d'autres protocoles de transport de données dans un système répondant aux conditions suivantes :
- adéquation en débit entre les besoins du protocole de transport et les possibilités offertes par le réseau des liaisons série-parallèle ; et
- existence de signaux de contrôle, périodiques et accessibles à l'interface logique de la couche physique du système.

## Revendications

1. Procédé d'interconnexion entre des modules informatiques ou de communication de données au moyen de liaisons série haut débit point-à-point véhiculant des informations multiplexées, organisées en trames, et comportant un motif de reconnaissance de début de trame, du type consistant à mettre en parallèle plusieurs voies haut débit permettant d'augmenter le débit d'informations échangées entres les modules, caractérisé en ce qu'il consiste, en émission et en réception, à synchroniser analogiquement les horloges de base de chaque module sur une horloge de référence générée par un module désigné comme module de référence parmi les modules, appelé module maître (MM), les autres modules étant appelés modules esclaves (ME), et à synchroniser numériquement le début des trames de chaque module esclave (ME) sur le début des trames émises par le module maître (MM).

2. Procédé selon la revendication 1, caractérisé en ce qu'il consiste pour la synchronisation analogique en émission :
- à extraire les signaux d'horloge de base de chaque module esclave (ME) à partir des signaux véhiculés sur chacune des liaisons reliant respectivement le module maître (MM) aux modules esclaves (ME) ;
- à asservir chaque module esclave (ME) en fréquence et en phase sur les données d'une voie, choisie comme voie maître, provenant du module maître (MM) ; et
- à partir des signaux d'horloge de base, à générer dans chaque module esclave (ME) un nouveau signal d'horloge à une fréquence déterminée, supérieure à leur fréquence d'horloge, véhiculé par la liaison reliant le module esclave (ME) au module maître (MM), et à un rythme imposé par l'horloge du module maître (MM).

3. Procédé selon l'une quelconque des revendications 1 à 2, caractérisé en ce qu'il consiste pour la synchronisation numérique en émission :
- à détecter le début des trames véhiculées par chaque liaison ; et
- à aligner numériquement le début des trames de chaque voie sur le motif de début de trame émis par le module maître (MM).

4. Procédé selon l'une quelconque des revendications 1 à 3, caractérisé en ce qu'il consiste pour la synchronisation analogique en réception :
- à désigner une voie maître (L1) parmi l'ensemble des voies formant la liaison reliant chaque module esclave (ME) au module maître (MM) ;
- à partir des données véhiculées sur la voie maître (Li), à extraire le signal d'horloge émis par le module connecté à la liaison ; et
- à générer un signal d'horloge (C1) à une fréquence supérieure à la fréquence du signal d'horloge extrait, pour servir de fréquence d'échantillonnage des signaux de données extraits respectivement des autres liaisons (Li).

5. Procédé selon l'une quelconque des revendications 1 à 4, caractérisé en ce qu'il consiste, pour la synchronisation numérique en réception, à aligner numériquement, et au bit près, l'ensemble des débuts des trames des liaisons sur les débuts des trames de la liaison maître, et à une fréquence déterminée correspondant au débit des données véhiculées sur chacune des liaisons.

6. Procédé selon l'une quelconque des revendications 1 à 5, caractérisé en ce qu'il consiste à définir une référence logique de comptage de bit, appelée "start bit", correspondant à un moyen d'identification du début des trames, contenu dans l'en-tête de chaque trame.

7. Procédé selon la revendication 6, caractérisé en ce qu'il y a recouvrement de tous les en-têtes relatifs à chaque liaison.

8. Procédé selon la revendication 7, caractérisé en ce qu'il consiste à utiliser le start bit émis par le module maître (MM), pour synchroniser chaque module esclave (ME).

9. Procédé selon la revendication 8, caractérisé en ce que chaque module esclave (ME) cale, pour chaque voie, son start bit d'émission sur le start bit reçu du module maître (MM) par la voie maître.

10. Procédé selon l'une quelconque des revendications 1 à 9, caractérisé en ce que les trames sont organisées suivant le protocole de hiérarchie numérique synchrone (SDH).

11. Interface d'interconnexion pour la mise en oeuvre du procédé selon l'une quelconque des revendications 1 à 10, définissant une interface physique entre des modules (A et B), à la fois émetteur et récepteur, reliés entre eux par une pluralité de liaisons série point-à-point, formant une liaison globale véhiculant des données émises et reçues par les modules (A et B), caractérisée en ce qu'elle comporte dans chaque module :
- des moyens de multiplexage (1) associés à chaque liaison série, disposés dans la couche physique du module, permettant de répartir les données émises sur la liaison globale à un débit déterminé par le module émetteur, sur un nombre déterminé de liaisons en parallèle ; chaque liaison parallèle véhiculant une partie des données suivant un débit supérieur au débit des blocs de données émis par le module émetteur ; et
- des moyens de démultiplexage (1) du nombre déterminé de liaisons en parallèle véhiculant respectivement les parties de données reçues pour reconstituer les données ayant traversé l'interface d'interconnexion, de façon synchrone et dans leur intégrité, à un débit correspondant au débit admissible par le module récepteur.

12. Interface selon la revendication 11, caractérisée en ce que les moyens de multiplexage/démultiplexage (1) comportent un bloc d'émission (2) et un bloc de réception (3) ; le bloc d'émission (2) comportant une pluralité de blocs de génération d'horloge (2i) et le bloc de réception (3) comportant une pluralité de blocs de récupération d'horloge (3i) ; chaque bloc de génération (2i) mettant en oeuvre la logique d'émission pour une liaison déterminée à laquelle il est couplé, le bloc d'émission (2) synchronisant la pluralité de blocs de génération (2i), et chaque bloc de récupération (3i) mettant en oeuvre des moyens de réception pour une liaison déterminée, le bloc de réception (3) définissant le domaine d'horloge relatif à la réception du nombre déterminé de liaisons couplées à un même module.

13. Interface selon la revendication 12, caractérisée en ce que chaque bloc de récupération d'horloge (3i) comporte:
- un circuit logique (R1) sensible aux fronts du signal de données, véhiculé par la liaison à laquelle il est connectée, permettant d'extraire une fréquence d'horloge pure et sensiblement fixe (C1) à partir des données transmises par la liaison (L1) ; et
- un dispositif oscillateur PLL (13 à 16) verrouillé en phase recevant la fréquence d'horloge issue du circuit logique (R1).

14. Interface selon l'une quelconque des revendications 12 et 13, caractérisée en ce que les blocs de réception (3) comportent un dispositif de rattrapage de la dispersion des temps de propagation dans les liaisons parallèles, appelée également skew.

15. Interface selon la revendication 14, caractérisée en ce que le dispositif de rattrapage de skew comporte :
- des moyens (2i) de génération d'une horloge de réception locale (C1) à partir du signal reçu (B1) de la liaison maître (L1) ;
- des moyens de déphasage (35i) des signaux reçus des liaisons esclaves (Li) ;
- des moyens d'échantillonnage (36i) des signaux déphasés, à un rythme imposé par l'horloge de réception locale;
- des moyens de décalage (42i) des signaux échantillonnés sur le signal reçu (Bi) de la liaison esclave (Li) ; les contenus logiques des signaux déphasés correspondant à un décalage de bit défini à un nombre entier déterminé de période STM-N près, où N correspond au niveau d'entrelacement ; et
- des moyens (38₁) définissant une fenêtre de fonctionnement des moyens de déphasage (35i) propres à chaque liaison esclave (Li) ; les moyens de déphasage (35i) étant actifs dans la phase précédant la détection du start bit et bloqués pendant le transfert du reste de la trame.
